# FASCICULE DE BREVET EUROPEEN

(11) **EP 2 106 941 B1**
(45) Date de publication et mention de la délivrance du brevet: **01.05.2013**
(21) Numéro de dépôt: 09157059.8
(22) Date de dépôt: 01.04.2009
(51) Int. Cl.: B60H 1/00

(54) **Appareil de chauffage, ventilation et/ou climatisation pour véhicule automobile.**
Kraftfahrzeugklimaanlage
Heating, ventilating and / or air conditioning apparatus for motor vehicle

(30) Priorité: 03.04.2008 FR 0801850
(43) Date de publication de la demande: 07.10.2009
(73) Titulaire: Valeo Systèmes Thermiques, 78321 Le Mesnil Saint Denis (FR)
(72) Inventeur: Lebecq, Olivier, 78390, Bois d'Arcy (FR); Queinnec, Jean-Yves, 78990, Elancourt (FR)
(74) Mandataire: Vieillevigne, Sébastien Nicolas Bernard

(56) Documents cités:
- EP-A- 1 634 735
- EP-A- 1 905 621
- FR-A- 2 795 684
- US-A1- 2003 094 262

## Description

L'invention concerne un procédé d'utilisation d'une installation de chauffage, ventilation et/ou climatisation, notamment d'un véhicule automobile. Elle a pour objet un procédé d'utilisation d'une installation de chauffage, de ventilation et/ou de climatisation équipée d'organes de répartition d'air.

Un véhicule automobile est couramment équipé d'une installation de chauffage, de ventilation et/ou de climatisation qui est destinée à réguler les paramètres aérothermiques de l'air distribué dans l'habitacle, en particulier la température et la vitesse d'un flux d'air délivré par l'installation à l'intérieur de l'habitacle. Dans sa généralité, l'installation comprend un boîtier délimité par des parois à travers laquelle sont ménagées des ouvertures, dont au moins une entrée d'air et au moins une sortie d'air. Le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle à travers la sortie d'air. Les moyens de traitement thermique comprennent un évaporateur qui est destiné à refroidir et à déshumidifier l'air le traversant et un radiateur, éventuellement associé à un radiateur additionnel, qui est destiné à réchauffer l'air qui le traverse.

Il est connu des installations telles que décrites précédemment dans laquelle l'évaporateur est placé à la suite de l'entrée d'air, de sorte que la totalité du flux d'air entrant à l'intérieur du boîtier est refroidi par l'évaporateur. Puis, le flux d'air froid ainsi généré est admis dans une chambre de mixage principale et/ou dans une chambre de chauffage dans laquelle est logé le radiateur et éventuellement le radiateur additionnel. La chambre de mixage principale sert à traiter un ou plusieurs flux d'air destiné(s) à des zones spécifiques de l'habitacle du véhicule automobile dans lequel est intégré l'installation de chauffage, de ventilation et/ou de climatisation. Elle est pourvu d'un premier organe de mixage afin de définir la proportion du flux d'air froid et du flux d'air chaud issu de la chambre de chauffage qui pénètre dans la chambre de mixage principale afin d'ajuster la température du flux d'air distribué dans la(es) zone(s) dédiées de l'habitacle, en particulier les zones avant et arrière. Il est également demandé, de nos jours, de prévoir une possibilité de gérer les zones avant du véhicule indépendamment de la zone arrière. Pour ce faire, le boîtier loge également une chambre de mixage secondaire destinée à générer un flux d'air secondaire pour aérer une zone secondaire de l'habitacle, telle qu'une zone arrière de ce dernier ou analogue. La chambre de mixage secondaire est en communication aéraulique avec la chambre de chauffage et reçoit tout ou partie du flux d'air ayant traversé l'évaporateur de l'installation de chauffage, de ventilation et/ou de climatisation. La chambre de mixage secondaire est équipée d'un deuxième organe de mixage afin de définir la proportion du flux d'air froid et du flux d'air chaud issu de la chambre de chauffage qui pénètre dans la chambre de mixage secondaire afin d'ajuster la température du flux d'air distribué dans la(es) zone(s) arrière. Une telle installation est notamment connue du document EP0663309A1.

On connaît également un système de chauffage, ventilation et/ou climatisation de véhicule automobile dans lequel on peut appliquer sur un module de base simple un module supplémentaire sous forme d'unité de mise à température d'un flux d'air destiné à la zone arrière du véhicule automobile. L'unité de mise à température de la zone arrière comprend un deuxième échangeur de chaleur pour la mise en température de l'air à acheminer à la région arrière. En plus de la séparation entre l'avant et l'arrière, on peut aussi effectuer une séparation gauche-droite, de sorte que le côté conducteur et le côté passager puissent être mis à température indépendamment. Ce dispositif est connu du document DE10037384A1.

Il existe également des installations de chauffage, ventilation et/ou climatisation, notamment pour un véhicule automobile dans lesquelles une partie du boîtier est réalisée de manière différente pour des systèmes de climatisation à zones différentes. Un groupe moto-ventilateur servant à créer un flux d'air dans l'installation, un évaporateur et un dispositif de chauffage sont disposés dans un boîtier identique et commun à tous les systèmes de chauffage, ventilation et/ou climatisation quelques soient le nombre de zones considérées. La mise en version est obtenue par l'adjonction d'un boîtier spécifique configuré pour répondre aux exigences que le nombre de zones requiert.

Ainsi, pour une configuration à plusieurs zones du système de chauffage, ventilation et/ou climatisation, une dérivation pour la zone arrière est prévue dans une région du boîtier dans un espace qui n'est pas utilisée dans un système de chauffage, ventilation et/ou climatisation ayant un nombre de zones plus réduit. De telles installations sont notamment décrites dans le document EP1634735A1.

Il est également connu du document EP 1905621, une installation de chauffage, ventillation et/ou climatisation à deux zones qui comprend une paroi centrale. Cette installation à deux cones peut être adaptée pour être une installation à une zone en supprimant la paroi centrale.

Actuellement, les constructeurs automobiles souhaitent pouvoir appliquer une même installation de chauffage, ventilation et/ou climatisation pour une même plateforme de véhicules, quelque soit le niveau d'option et de gamme du véhicule considéré.

Pareillement, une tendance existe de nos jours à transposer une installation de chauffage, ventilation et/ou climatisation d'une plateforme de véhicules donnée à d'autres plateformes de véhicules.

Compte tenu des diversités envisagées, les solutions connues ne sont pas compatibles avec les exigences économiques et de compacité recherchées.

Conformément à l'invention, il est proposé un procédé d'utilisation d'une installation de chauffage et/ou climatisation conformément à la revendication 1.

Un tel agencement permet de disposer d'un encombrement unique pour une installation de chauffage, ventilation et/ou climatisation pour un véhicule automobile ayant divers niveaux de confort et donc, un nombre différent de zones de l'habitacle alimentées par des flux d'air traités différemment d'un point de vue aéraulique et thermique, c'est-à-dire un flux d'air à une température donnée et à un débit de flux d'air défini selon la zone considérée.

Ainsi, la gestion de diversités ne requiert pas de développements additionnels pour répondre aux besoins de multiplicités de versions d'un véhicule.

Il est, de plus, possible de facilement gérer cette diversité sans nuire à l'encombrement.

Dans un mode de réalisation préféré de l'invention, le boîtier comprend un évaporateur pour refroidir le flux d'air le traversant, un radiateur de chauffage et/ou un radiateur additionnel pour réchauffer au moins une partie du flux d'air ayant traversé de l'évaporateur. Selon ce mode de réalisation, le boîtier comprend deux chambres de mixage principales disposées de part et d'autre de la paroi de séparation admettant respectivement une portion du flux d'air ayant traversé l'évaporateur et/ou une portion du flux d'air ayant traversé le radiateur de chauffage et/ou le radiateur additionnel.

De façon particulièrement avantageuse, le boîtier comprend deux organes de mixage d'air principaux disposés de part et d'autre de la paroi de séparation et commandant respectivement l'admission de la portion du flux d'air ayant traversé l'évaporateur et/ou de la portion du flux d'air ayant traversé le radiateur de chauffage et/ou le radiateur additionnel dans les chambres de mixages principales.

Selon un mode particulier de réalisation, le boîtier comprend deux premiers volets de mixage d'air additionnels disposés de part et d'autre de la paroi de séparation et commandant la portion du flux d'air ayant traversé l'évaporateur dirigée vers le radiateur de chauffage et/ou le radiateur additionnel.

Alternativement ou en complément, le boîtier comprend deux organes de mixage d'air secondaire disposés de part et d'autre de la paroi de séparation et commandant respectivement la portion du flux d'air ayant traversé l'évaporateur et/ou la portion du flux d'air ayant traversé le radiateur de chauffage et/ou le radiateur additionnel dans deux chambres de mixage secondaires.

Selon les divers modes de réalisation de l'installation chauffage, ventilation et/ou climatisation, le boîtier comprend deux deuxièmes volets de sécurité additionnels disposés de part et d'autre de la paroi de séparation et commandant la portion du flux d'air ayant traversé le radiateur de chauffage et/ou le radiateur additionnel dans les chambres de mixages secondaires.

De façon particulièrement avantageuse, les organes de mixage d'air principaux et/ou les premiers volets de mixage d'air additionnels et/ou les organes de mixage d'air secondaire et/ou les deuxièmes volets de sécurité additionnels sont commandés simultanément.

Selon l'invention, l'installation comporte plusieurs sorties d'air dans lesquelles sont agencées des volets de distribution d'air pour commander l'ouverture et la fermeture des sorties d'air. Préférentiellement, les volets de distribution d'air sont accouplés par paire et commandés simultanément.

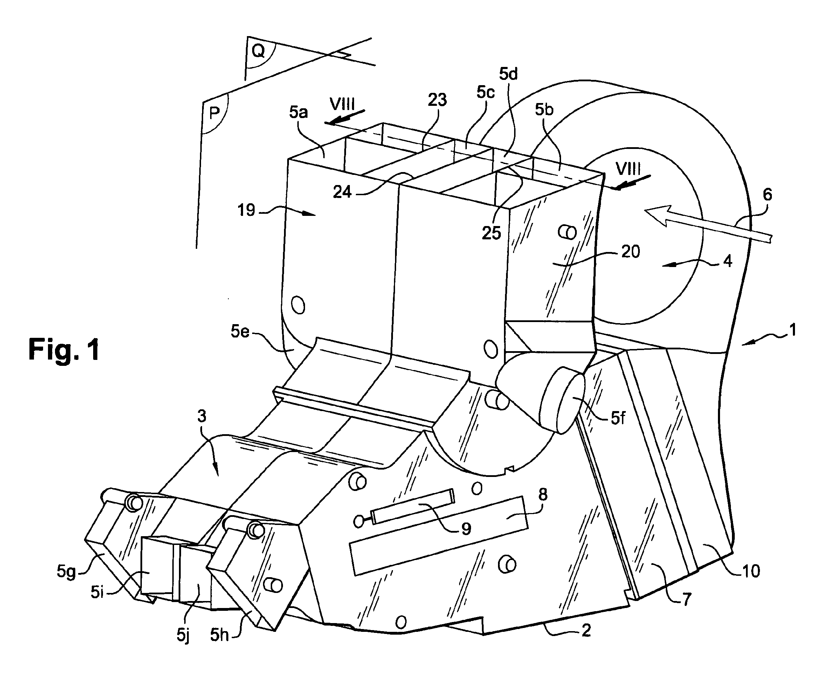

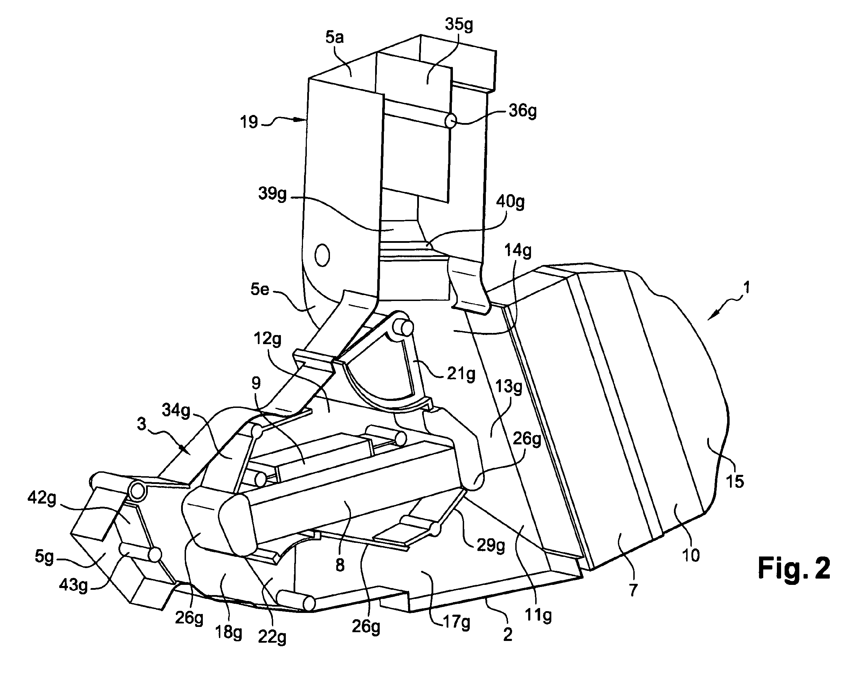

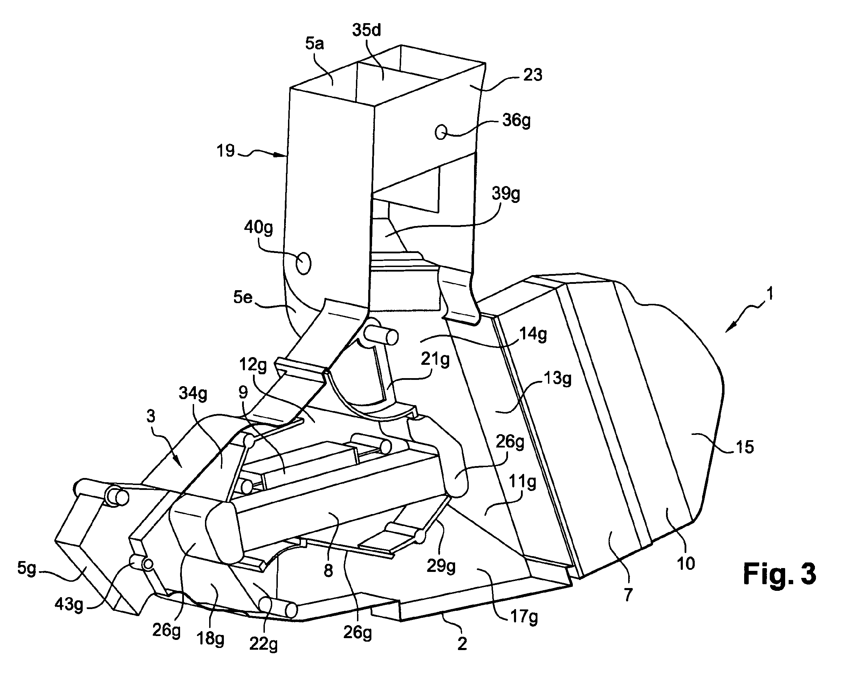

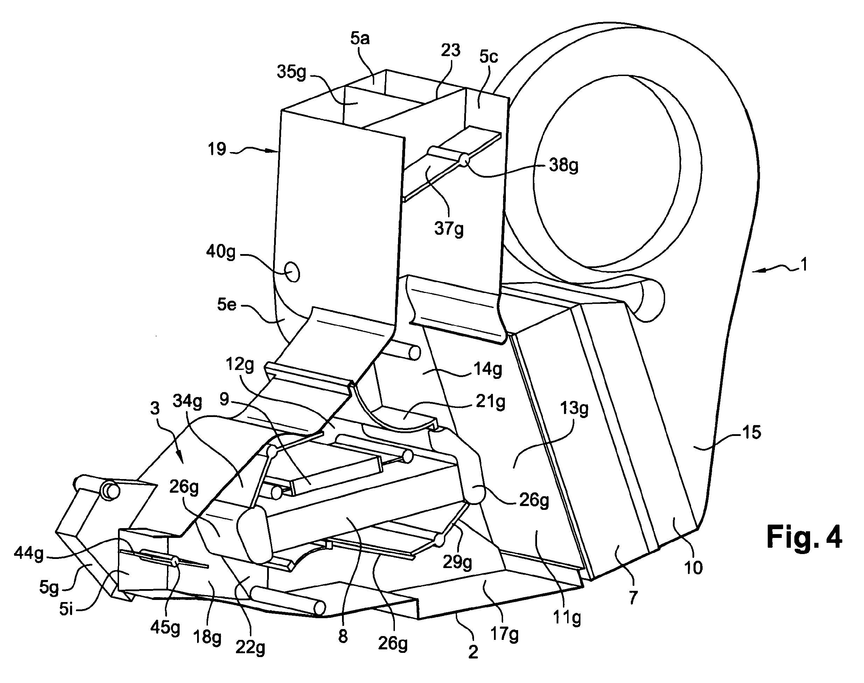

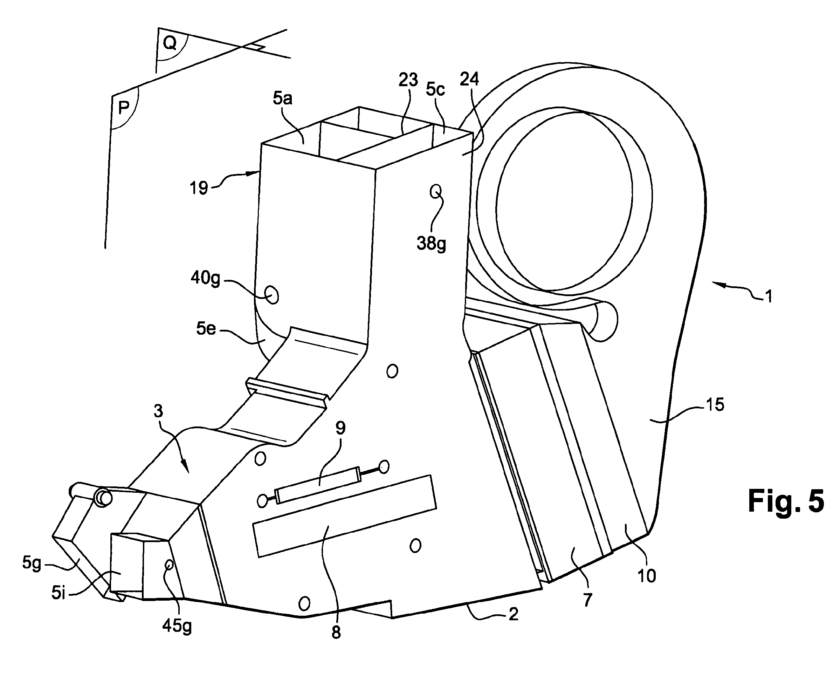

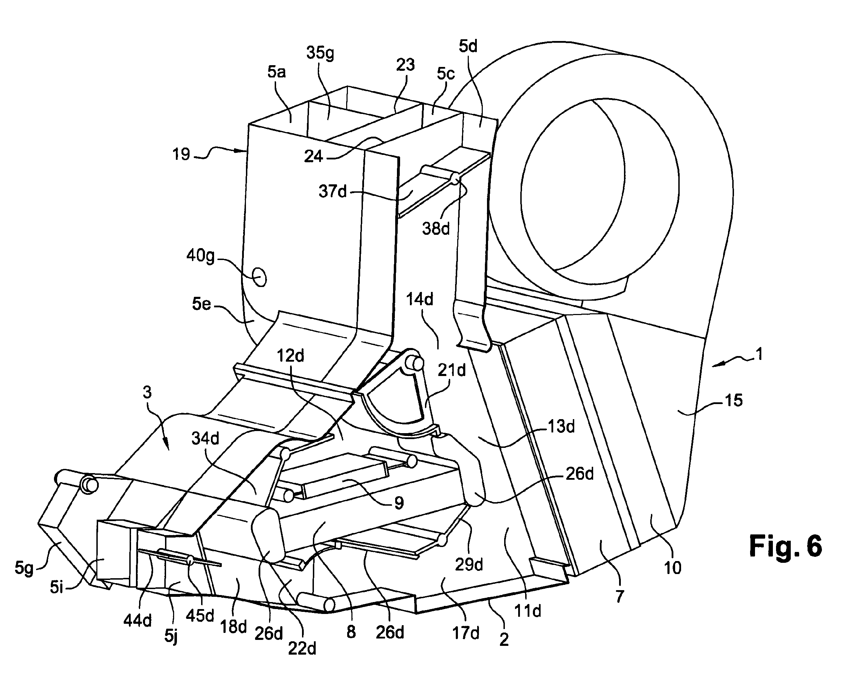

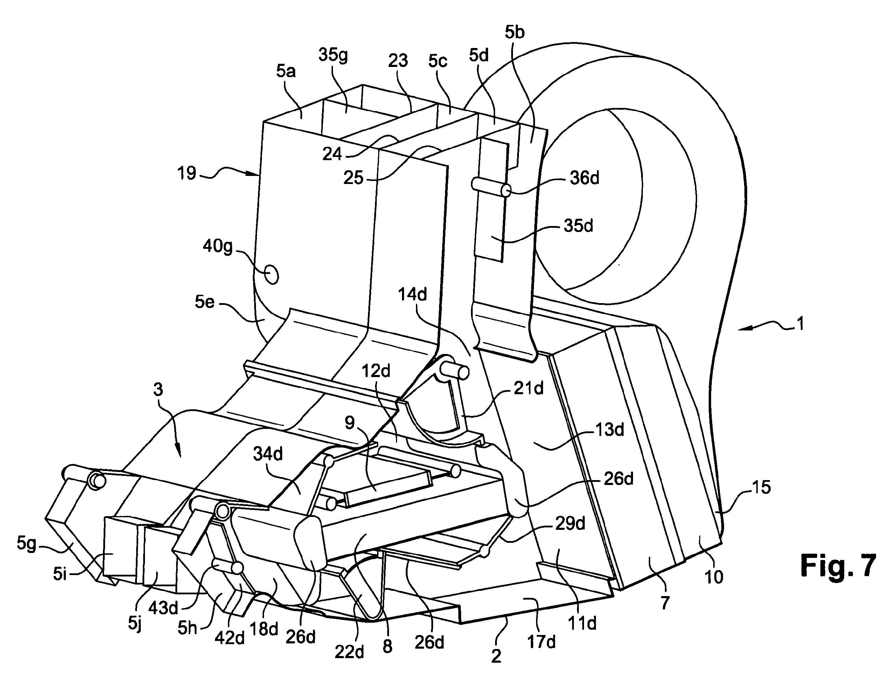

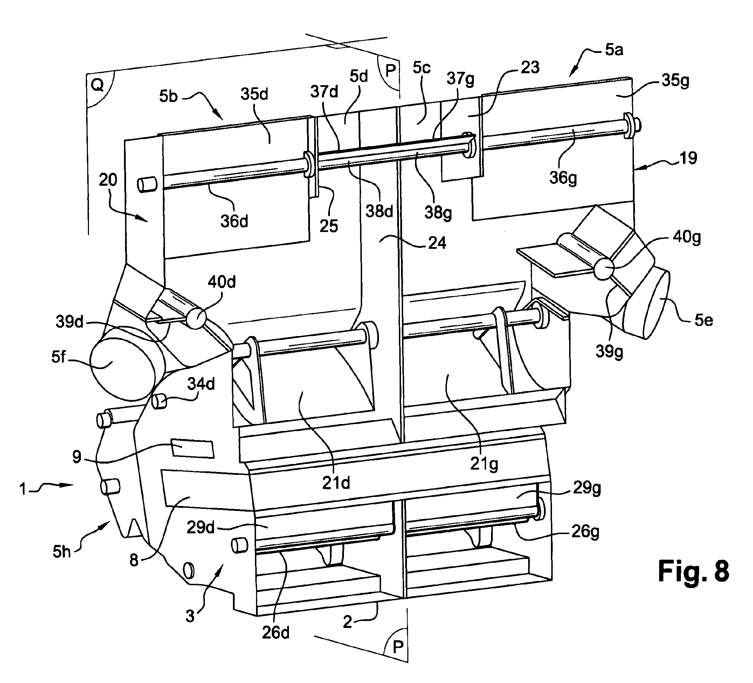

La présente invention sera mieux comprise, et des détails en relevant ainsi que d'autres avantages et caractéristiques apparaîtront, à la lecture de la description purement illustrative et donnée à titre d'exemple qui va être faite d'une forme préférée de réalisation et doit être lue en se référant aux dessins annexés sur lesquels on a représenté :
- En figure 1, est une illustration schématique en perspective d'une installation de chauffage, de ventilation et/ou de climatisation selon la présente invention,
- En figure 2, une vue en coupe selon un premier plan parallèle au plan de symétrie P de l'installation de la figure 1,
- En figure 3, une vue en coupe selon un deuxième plan parallèle au plan de symétrie P de l'installation de la figure 1,
- En figure 4, une vue en coupe selon un troisième plan parallèle au plan de symétrie P de l'installation de la figure 1,
- En figure 5, une vue en coupe selon un quatrième plan confondu avec le plan de symétrie P de l'installation de la figure 1,
- En figure 6, une vue en coupe selon un cinquième plan parallèle au plan de symétrie P de l'installation de la figure 1,
- En figure 7, une vue en coupe selon un sixième plan parallèle au plan de symétrie P de l'installation de la figure 1, et
- En figure 8, une vue en coupe selon un septième plan Q perpendiculaire au plan de symétrie P de l'installation de la figure 1 conformément à la direction VIII-VIII de la figure 1.

La figure 1 représente une installation 1 de chauffage, de ventilation et/ou de climatisation destinée à équiper un véhicule automobile pour réguler les paramètres aérothermiques du flux d'air distribué à l'intérieur de l'habitacle du véhicule. L'installation 1 comporte un boîtier 2 délimité par une enveloppe 3 comportant une entrée d'air 4 et plusieurs sorties d'air 5. Les sorties d'air portent la référence 5 lorsqu'elles sont considérées dans leur ensemble sans distinction entre elles et portent les références 5a, 5b, 5c, 5d, ... lorsqu'elles sont considérées unitairement vis-à-vis de leur fonctionnalité et destination d'emploi. Selon le présente invention, les sorties d'air 5 sont au nombre de dix dans l'exemple de réalisation.

Un pulseur, non représenté sur les figures, est agencé en aval de l'entrée d'air 4 pour faire circuler un flux d'air 6 depuis l'entrée d'air 4 dans l'installation 1 et par suite vers les sorties d'air 5. Le flux d'air 6 pénètre par une chambre d'admission 15 (représentée sur les figures 2 à 7) du boîtier 2 de l'installation 1.

Chacune des sorties d'air 5a, 5b, 5c, 5d, ... est destinée à délivrer un flux d'air respectif dans une zone spécifique de l'habitacle, telle qu'une zone avant, distinguée entre une zone avant droite et une zone avant gauche, une zone arrière, distinguée entre une zone arrière droite et une zone arrière gauche ou toute autre zone particulière de l'habitacle, notamment des zones dites 'pieds' droite et gauche destinées à distribuer un flux d'air en partie inférieure de l'habitacle ou des zones dites 'dégivrage' destinées à distribuer un flux d'air au niveau du pare-brise. Le présent exemple de réalisation décrit comporte dix sorties d'air propres à une installation quatre zones. Toutefois, la présente invention couvre également les installations dite deux zones ou trois zones. Dans de tels agencements, le nombre de sorties d'air peut être inférieur ou égal à dix.

Depuis la chambre d'admission 15 et selon le sens d'écoulement du flux d'air 6, le boîtier 2 loge un filtre 10 pour retenir des particules transportées par le flux d'air 6. Le boîtier 2 loge également des moyens de traitement thermique constitués par un évaporateur 7, un radiateur de chauffage 8 et/ou un radiateur additionnel 9, en particulier un radiateur électrique comportant des organes de chauffage à coefficient de température positive (CTP). Les moyens de traitement thermique 7, 8 et 9 permettent de refroidir et/ou réchauffer le flux d'air 6 respectivement en un flux d'air froid et un flux d'air chaud.

Le flux d'air froid est issu de la traversée du flux d'air 6 à travers l'évaporateur 7 et le flux d'air chaud résulte du passage de toute ou partie du flux d'air froid à travers le radiateur de chauffage 8 et/ou le radiateur additionnel 9.

On se réfère dorénavant plus particulièrement aux figures 2 à 7. Ainsi, telle que présenté sur ces figures, le boîtier 2 loge, l'évaporateur 7 ou analogue pour refroidir le flux d'air 6 entrant à l'intérieur de l'installation 1 à travers la chambre d'admission 15. En aval de l'évaporateur 7, le boîtier 2 ménage deux chambres d'air froid 11g et 11d, respectivement une chambres d'air froid gauche 11 g et une chambre d'air froid droite 11 d, qui reçoivent le flux d'air 6 refroidi par l'évaporateur 7. Le boîtier 2 ménage également deux chambres de chauffage 12g et 12d, respectivement une chambres de chauffage gauche 12g et une chambre de chauffage droite 12d, qui logent le radiateur 8 ou analogue, associé à un radiateur additionnel 9, constituant un moyen de chauffage d'appoint qui peut être réaliser par exemple par des résistances électriques, en particulier à coefficient de température positive (CTP), pour réchauffer un flux d'air admis à l'intérieur des chambres de chauffage gauche 12g et droite 12d.

Le boîtier 2 est symétrique par rapport à un plan de symétrie P. En conséquence, la description qui va être faite est propre à la partie gauche de l'installation 1. Un agencement similaire est disposé de façon symétrique pour la partie droite de l'installation 1. Dans la suite de la description, et à l'exception des sorties 5, un indice 'g' sera attribué pour les éléments faisant partie intégrante de la partie gauche du boîtier 2 et un indice 'd' sera attribué pour les éléments faisant partie intégrante de la partie droite du boîtier 2.

Le flux d'air froid et/ou le flux d'air chaud est (sont) envoyé(s) dans des chambres de mixage ménagées dans le boîtier 2 qui sont aptes à délivrer un flux d'air mixé respectif à chacune des zones de l'habitacle détaillées précédemment.

La chambre d'air froid gauche 11g est en communication aéraulique avec un canal principal d'air froid gauche 13g qui débouche à l'intérieur d'une chambre de mixage principale gauche 14g. Le canal principal d'air froid gauche 13g est destiné à véhiculer un flux d'air froid gauche depuis la chambre d'air froid gauche 11 g vers la chambre de mixage principale gauche 14g. La chambre d'air froid gauche 11 g est également en communication aéraulique avec un canal secondaire d'air froid gauche 17g qui débouche à l'intérieur d'une chambre de mixage secondaire gauche 18g. Le canal secondaire d'air froid gauche 17g est destiné à véhiculer un flux secondaire d'air froid gauche depuis la chambre d'air froid gauche 11g vers la chambre de mixage secondaire gauche 18g.

Selon la présente invention, les flux d'air froid principal gauche et secondaire gauche circulent librement et indépendamment l'un de l'autre depuis la chambre d'air froid gauche 11g. Des organes de mixage d'air principal gauche 21g et secondaire gauche 22g sont agencés respectivement dans les chambres de mixage principale gauche 14g et secondaire gauche 18g. Ces dispositions sont telles que les débits des flux d'air froid principal gauche et secondaire gauche ne sont affectés que par les organes de mixage d'air gauche 21g et 22g. Il en découle une facilité et une liberté de gestion de la génération de flux d'air en entrée des chambres de mixage principal gauche 14 et secondaire gauche 18g.

Les canaux d'air froid principal gauche 13g et secondaire gauche 17g sont agencés dans des directions sensiblement perpendiculaires l'une par rapport à l'autre. Cet agencement n'est pas exclusif au sens de la présente invention. Ces deux directions définissent un secteur angulaire à l'intérieur duquel est ménagée la chambre de chauffage gauche 12g. Il en résulte une minimisation de l'encombrement global de l'installation 1.

Pour éviter un réchauffement, dit 'parasite', des flux d'air froid principal gauche et secondaire gauche au contact du radiateur 8, une paroi d'isolation gauche 26g s'étend en amont de la chambre de chauffage gauche 12g séparant cette dernière et les canaux d'air froid principal gauche 13g et secondaire gauche 17g.

La paroi d'isolation gauche 26g comporte une première bouche d'admission d'air gauche à travers laquelle une première fraction du flux secondaire d'air froid gauche est susceptible de circuler afin de traverser par la suite le radiateur de chauffage 8 et/ou le radiateur additionnel 9. La première bouche d'admission d'air est équipée d'un premier volet de mixage d'air additionnel gauche 29g mobile entre une position d'ouverture dans laquelle il autorise le passage de la première fraction du flux secondaire d'air froid depuis le canal secondaire d'air froid gauche 17g vers la chambre de chauffage gauche 12g, et une position de fermeture dans laquelle il interdit un tel passage.

La paroi d'isolation gauche 26g comporte également une deuxième bouche d'admission d'air à travers laquelle une deuxième fraction du flux secondaire d'air froid gauche est susceptible de circuler. La deuxième bouche d'admission d'air peut être obturée par l'intermédiaire de l'organe de mixage d'air secondaire gauche 22g.

L'organe de mixage d'air principal gauche 21g est mobile entre une position de fermeture ou "tout chaud", dans laquelle l'organe de mixage d'air principal gauche 21g interdit le passage du flux d'air froid principal gauche depuis la chambre d'air froid gauche 11g vers la chambre de mixage principale gauche 14g tout en autorisant simultanément un passage d'un flux d'air chaud issu de la chambre de chauffage gauche 12g vers la chambre de mixage principale gauche 14g, et une position d'ouverture ou "tout froid", dans laquelle l'organe de mixage d'air principal gauche 21g autorise le passage du flux d'air froid principal gauche depuis la chambre d'air froid gauche 11g vers la chambre de mixage principale gauche 14g tout en interdisant simultanément un passage d'un flux d'air chaud issu de la chambre de chauffage gauche 12g vers la chambre de mixage principale gauche 14g.

L'organe de mixage d'air principal gauche 21g est agencé de telle façon qu'il calibre, dans des positions intermédiaires, la proportion du flux d'air froid principal gauche issu de la chambre d'air froid gauche 12g et du flux d'air chaud issu de la chambre de chauffage gauche 12g entrant dans la chambre de mixage principale gauche 14g. Selon la position de l'organe de mixage d'air principal gauche 21 g, lachambre de mixage principale gauche 12g est alimentée par un flux d'air totalement froid ou par un flux d'air totalement chaud ou des portions de flux d'air chaud et de flux d'air froid pour obtenir un flux d'air mixé selon la position de l'organe de mixage d'air principal gauche 21 g.

L'organe de mixage d'air secondaire gauche 22g est mobile entre une position une position de fermeture ou "tout chaud", dans laquelle l'organe de mixage d'air secondaire gauche 22g interdit le passage du flux d'air froid secondaire gauche depuis le canal d'air froid secondaire gauche 17g vers la chambre de mixage secondaire gauche 18g tout en autorisant simultanément un passage de la deuxième fraction du flux d'air froid secondaire gauche depuis le canal d'air froid secondaire gauche 17g vers la chambre de chauffage gauche 12g, et une position d'ouverture ou "tout froid", dans laquelle l'organe de mixage d'air secondaire gauche 22g interdit le passage de la deuxième fraction de flux d'air froid secondaire gauche depuis le canal d'air froid secondaire gauche 17g vers la chambre de chauffage gauche 12g tout en autorisant simultanément un passage du flux d'air froid secondaire gauche depuis le canal d'air froid secondaire gauche 17g vers la chambre de mixage secondaire gauche 18g.

Ces dispositions sont telles qu'un flux d'air est susceptible d'être admis à l'intérieur de la chambre de chauffage gauche 12g, soit par l'intermédiaire de la première bouche d'admission d'air lorsque le premier volet de mixage d'air additionnel gauche 29g est placé en position d'ouverture, soit par l'intermédiaire de la deuxième bouche d'admission d'air lorsque l'organe de mixage d'air secondaire gauche 22g est placé en position fermée, soit lorsque les deux configurations précédentes sont simultanément réunies.

Par ailleurs, la chambre de chauffage gauche 12g est en communication aéraulique avec la chambre de mixage secondaire gauche 18g. Un volet de sécurité additionnel gauche 34g est agencé mobile entre une position d'ouverture dans laquelle il autorise un passage d'un flux secondaire d'air chaud depuis la chambre de chauffage gauche 12g vers la chambre de mixage secondaire gauche 18g, et une position de fermeture dans laquelle il interdit un tel passage. De façon préférentielle, le volet de sécurité additionnel gauche 34g permet d'assurer une déviation du flux secondaire d'air chaud depuis la chambre de chauffage gauche 12g vers la sortie d'air 'dégivrage' avant gauche 5c afin de permettre une distribution à pleine puissance d'air chaud vers une zone dédiée de l'habitacle, notamment pour des raisons de sécurité, en particulier le pare brise.

L'organe de mixage d'air secondaire gauche 22g est agencé de telle façon qu'il calibre, dans des positions intermédiaires, la proportion du flux d'air froid secondaire gauche issu de la chambre d'air froid gauche 12g et du flux d'air chaud issu de la chambre de chauffage gauche 12g entrant dans la chambre de mixage secondaire gauche 18g. Selon la position de l'organe de mixage d'air secondaire gauche 22g, la chambre de mixage secondaire gauche 18g est alimentée par un flux d'air totalement froid ou par un flux d'air totalement chaud ou des portions de flux d'air chaud et de flux d'air froid pour obtenir un flux d'air mixé selon la position du volet de sécurité additionnel gauche 34g.

La présence de volets de mixage principal gauche 21g et secondaire gauche 22g, du volet de mixage additionnel gauche 29g et du volet de sécurité 34g permet de gérer la température des différentes zones de façon particulièrement adaptée et optimisée pour assurer un confort optimal des occupants de la zone dans laquelle l'air traitée est distribué.

Ainsi, l'installation 1 permet d'obtenir un flux d'air avant et un flux d'air arrière à des températures différentes.

On se réfère dorénavant particulièrement à la figure 2 qui représente une vue en coupe selon un premier plan parallèle au plan de symétrie P de l'installation 1. Ce premier plan est compris entre une paroi extérieur gauche 19 et une paroi de séparation gauche 23 du boîtier 2 et est parallèle au plan de symétrie P du boîtier 2.

Comme on peut le voir sur la figure 2, le boîtier 2 comprend une sortie d'air 'aération' avant gauche 5a disposée en aval, dans le sens d'écoulement du flux d'air, de la chambre de mixage principale gauche 14g. Elle constitue une sortie d'air pour un flux d'air issu de la chambre de mixage principale gauche 14g. L'ouverture et la fermeture de la sortie d'air 'aération' avant gauche 5a sont commandées par un volet 'aération' avant gauche 35g pivotant autour d'un axe de rotation du volet 'aération' avant gauche 36g. L'axe de rotation du volet'aération' avant gauche 36g est perpendiculaire à la paroi extérieure gauche 19. Le flux d'air sortant par la sortie d'air 'aération' avant gauche 5a est destiné à être distribué dans la partie supérieure de la zone avant gauche de l'habitacle du véhicule. Il débouche généralement dans l'habitacle par des aérateurs agencés sur la planche de bord.

En aval de la chambre de mixage principale gauche 14g, dans le sens d'écoulement du flux d'air, se trouve également une sortie d'air 'pied' avant gauche 5e. Selon l'exemple de réalisation, la sortie d'air 'pied' avant gauche 5e est agencée à travers la paroi extérieure gauche 19 du boîtier 2. L'ouverture et la fermeture de la sortie d'air 'pied' avant gauche 5e sont commandées par un volet 'pied' avant gauche 39g pivotant autour d'un axe de rotation du volet 'pied' avant gauche 40g. L'axe de rotation du volet 'pied' avant gauche 40g est parallèle à la paroi extérieure gauche 19. Le flux d'air sortant par la sortie d'air 'pied' avant gauche 5e est destiné à être distribué dans la partie inférieure de la zone avant gauche de l'habitacle du véhicule. Il débouche généralement dans l'habitacle par une bouche agencée sur la partie inférieure gauche de la console centrale ou analogue.

Le boîtier 2 comprend également une sortie d'air 'aération' arrière gauche 5g disposée en aval, dans le sens d'écoulement du flux d'air, de la chambre de mixage secondaire gauche 18g. Elle constitue une sortie d'air pour un flux d'air issu de la chambre de mixage secondaire gauche 18g. L'ouverture et la fermeture de la sortie d'air 'aération' arrière gauche 5g sont commandées par un volet 'aération' arrière gauche 42g pivotant autour d'un axe de rotation du volet 'aération' arrière gauche 43g. L'axe de rotation du volet'aération' arrière gauche 43g est perpendiculaire à au plan de symétrie P du boîtier 2. Le flux d'air sortant par la sortie d'air 'aération' arrière gauche 5g est destiné à être distribué dans la partie supérieure de la zone arrière gauche de l'habitacle du véhicule. Il débouche généralement dans l'habitacle par des aérateurs agencés dans la console centrale arrière et/ou sur les montants latéraux de l'habitacle du véhicule.

Les figures 3 et 4 représentent des vues en coupe selon un deuxième et un troisième plans parallèles au plan de symétrie P de l'installation 1. Plus particulièrement, le deuxième plan de coupe, tel que représenté sur la figure 2, est disposé au niveau d'une paroi de séparation gauche 23. La paroi de séparation gauche 23 est disposée entre la paroi extérieure gauche 19 et le plan de symétrie P du boîtier 2.

La paroi de séparation gauche 23 sert de moyen de séparation entre la sortie d'air 'aération' avant gauche 5a et une sortie d'air 'dégivrage' avant gauche 5c depuis la chambre de mixage principale gauche 14g.

Comme plus particulièrement détaillé sur la figure 3, le boîtier 2 comprend la sortie d'air 'dégivrage' avant gauche 5c disposée en aval, dans le sens d'écoulement du flux d'air, de la chambre de mixage principale gauche 14g. Elle constitue une sortie d'air pour un flux d'air issu de la chambre de mixage principale gauche 14g. L'ouverture et la fermeture de la sortie d'air 'dégivrage' avant gauche 5c sont commandées par un volet 'dégivrage' avant gauche 37g pivotant autour d'un axe de rotation du volet 'dégivrage' avant gauche 38g. L'axe de rotation du volet 'dégivrage' avant gauche 38g est perpendiculaire à la paroi de séparation gauche 23. De façon particulièrement avantageuse, l'axe de rotation du volet 'dégivrage' avant gauche 38g est coaxial avec l'axe de rotation du volet 'aération' avant gauche 36g. Le flux d'air sortant par la sortie d'air 'dégivrage' avant gauche 5c est destiné à être distribué dans une zone agencée en partie inférieure du pare-brise du véhicule.

Le boîtier 2 comprend également, telle que représenté en figure 4, une sortie d'air 'pied' arrière gauche 5i disposée en aval, dans le sens d'écoulement du flux d'air, de la chambre de mixage secondaire gauche 18g. Elle constitue une sortie d'air pour un flux d'air issu de la chambre de mixage secondaire gauche 18g. L'ouverture et la fermeture de la sortie d'air 'pied' arrière gauche 5i sont commandées par un volet 'pied' arrière gauche 44g pivotant autour d'un axe de rotation du volet 'pied' arrière gauche 45g. L'axe de rotation du volet 'pied' arrière gauche 45g est perpendiculaire au plan de symétrie P du boîtier 2. Le flux d'air sortant par la sortie d'air 'pied' arrière gauche 5i est destiné à être distribué dans la partie inférieure de la zone arrière gauche de l'habitacle du véhicule.

La figure 5 représente une vue en coupe selon un quatrième plan confondu avec le plan de symétrie P de l'installation 1. On remarque donc que le boîtier comprend donc une paroi de séparation médiane 24 contenue dans le plan de symétrie P de l'installation 1.

La paroi de séparation médiane 24 divise intégralement l'ensemble du boîtier 2 situé en aval de l'évaporateur 7 en deux parties symétriques et indépendantes.

Ainsi, aucun flux d'air de la partie gauche du boîtier 2 entre en interaction avec un flux d'air de la partie droite du boîtier 2.

Comme le montre la figure 5, le radiateur de chauffage 8 et le radiateur additionnel 9 traversent la paroi de séparation médiane 24. En effet, ces deux éléments sont des composants unitaires communs à la partie droite et à la partie gauche du boîtier 2. Selon une alternative non représentée, il est possible de disposer deux radiateurs de chauffage et deux radiateurs additionnels respectivement dédiés à la zone gauche et à la zone droite du boîtier 2.

Les figures 6 et 7 sont propres à la partie droite du boîtier 2. Plus particulièrement, l'agencement de la figure 6 est le symétrique de l'agencement de la figure 4 et l'agencement de la figure 7 est le symétrique de l'agencement de la figure 3.

Plus particulièrement, la figure 6 représente une vue en coupe selon un cinquième plan parallèle au plan de symétrie P de l'installation 1. Ce cinquième plan est compris entre la paroi de séparation médiane 24 et une paroi de séparation droite 25 agencée entre la paroi de séparation médiane 25 et une paroi extérieure droite 20 du boîtier 2.

La figure 7 représente une vue en coupe selon un sixième plan parallèle au plan de symétrie P de l'installation 1. Ce sixième plan est compris entre la paroi de séparation gauche 23 du boîtier 2 et la paroi extérieur gauche 19 et est parallèle au plan de symétrie P du boîtier 2.

En se reportant donc aux figures 6 et 7, le boîtier 2 comprend une sortie d'air'aération' avant droite 5b disposée en aval, dans le sens d'écoulement du flux d'air, de la chambre de mixage principale droite 14d. Elle constitue une sortie d'air pour un flux d'air issu de la chambre de mixage principale droite 14d. L'ouverture et la fermeture de la sortie d'air 'aération' avant droite 5b sont commandées par un volet 'aération' avant droite 35d pivotant autour d'un axe de rotation du volet 'aération' avant droite 36d. L'axe de rotation du volet 'aération' avant droite 36d est perpendiculaire à la paroi extérieure droite 20. Le flux d'air sortant par la sortie d'air 'aération' avant droite 5b est destiné à être distribué dans la partie supérieure de la zone avant droite de l'habitacle du véhicule. Il débouche généralement dans l'habitacle par des aérateurs agencés sur la planche de bord.

le boîtier 2 comprend une sortie d'air 'dégivrage' avant droite 5d disposée en aval, dans le sens d'écoulement du flux d'air, de la chambre de mixage principale droite 14d. Elle constitue une sortie d'air pour un flux d'air issu de la chambre de mixage principale droite 14d. L'ouverture et la fermeture de la sortie d'air 'dégivrage' avant droite 5d sont commandées par un volet 'dégivrage' avant droite 37d pivotant autour d'un axe de rotation du volet 'dégivrage' avant droite 38d. L'axe de rotation du volet 'dégivrage' avant droite 38d est perpendiculaire à la paroi de séparation droite 25. De façon particulièrement avantageuse, l'axe de rotation du volet 'dégivrage' avant droite 38d est coaxial avec l'axe de rotation du volet 'aération' avant droite 36d. Le flux d'air sortant par la sortie d'air 'dégivrage' avant droite 5d est destiné à être distribué dans une zone agencée en partie inférieure du pare-brise du véhicule.

De façon préférentielle et particulièrement avantageuse, les axes de rotations des volet 'aération' avant gauche 36g, 'aération' avant droite 36d, 'dégivrage' avant gauche 38g et 'dégivrage' avant droite 38d sont coaxiaux et sont disposés selon une même direction. Toutefois, selon une variante de réalisation non représentée, ces différentes axes de rotation peuvent être disposés selon des directions différentes.

En aval de la chambre de mixage principale droite 14d, dans le sens d'écoulement du flux d'air, se trouve également une sortie d'air 'pied' avant droite 5f. Selon l'exemple de réalisation, la sortie d'air 'pied' avant droite 5f est agencée à travers une paroi extérieure droite 20 du boîtier 2. De façon préférentielle, la paroi extérieure droite 20 est sensiblement parallèle à la paroi extérieure gauche 19 et au plan de symétrie P du boîtier 2. L'ouverture et la fermeture de la sortie d'air 'pied' avant droite 5f sont commandées par un volet 'pied' avant droite 39d pivotant autour d'un axe de rotation du volet 'pied' avant droite 40d. L'axe de rotation du volet 'pied' avant droite 40d est parallèle à la paroi extérieure droite 20. Le flux d'air sortant par la sortie d'air 'pied' avant droite 5f est destiné à être distribué dans la partie inférieure de la zone avant droite de l'habitacle du véhicule. Il débouche généralement dans l'habitacle par une bouche agencée sur la partie inférieure droite de la console centrale ou analogue.

Le boîtier 2 comprend également une sortie d'air 'aération' arrière droite 5h disposée en aval, dans le sens d'écoulement du flux d'air, de la chambre de mixage secondaire droite 18d. Elle constitue une sortie d'air pour un flux d'air issu de la chambre de mixage secondaire droite 18d. L'ouverture et la fermeture de la sortie d'air 'aération' arrière droite 5h sont commandées par un volet 'aération' arrière droite 42d pivotant autour d'un axe de rotation du volet 'aération' arrière droite 43d. L'axe de rotation du volet 'aération' arrière droite 43d est perpendiculaire à au plan de symétrie P du boîtier 2. Le flux d'air sortant par la sortie d'air 'aération' arrière droite 5h est destiné à être distribué dans la partie supérieure de la zone arrière droite de l'habitacle du véhicule. Il débouche généralement dans l'habitacle par des aérateurs agencés dans la console centrale arrière et/ou sur les montants latéraux de l'habitacle du véhicule.

le boîtier 2 comprend également une sortie d'air 'pied' arrière droite 5j disposée en aval, dans le sens d'écoulement du flux d'air, de la chambre de mixage secondaire droite 18d. Elle constitue une sortie d'air pour un flux d'air issu de la chambre de mixage secondaire droite 18d. L'ouverture et la fermeture de la sortie d'air 'pied' arrière droite 5j sont commandées par un volet 'pied' arrière droite 44d pivotant autour d'un axe de rotation du volet 'pied' arrière droite 45d. L'axe de rotation du volet 'pied' arrière droite 45d est perpendiculaire au plan de symétrie P du boîtier 2. Le flux d'air sortant par la sortie d'air 'pied' arrière droite 5j est destiné à être distribué dans la partie inférieure de la zone arrière droite de l'habitacle du véhicule. Il débouche généralement dans l'habitacle par des aérateurs agencés dans la console centrale arrière de l'habitacle du véhicule.

La figure 8 présente une vue en coupe selon un septième plan Q perpendiculaire au plan de symétrie P de l'installation de la figure 1 conformément à la direction VIII-VIII de la figure 1. Sur la figure 8, la paroi de séparation 24 divise le boîtier 2 en deux parties symétriques par rapport au plan P.

L'installation 1 est propre à convenir à tous types de dispositifs de chauffage, ventilation et/ou climatisation, quelque soit le nombre de zones recherchées.

En effet, selon la présente invention, les volets servant à ouvrir et fermer les sorties d'air 5 sont commandés séparément ou en tout ou partie couplés entre eux. Une description va être faite de différentes configurations pour des installations répondant aux besoins de distribution de flux d'air en une zone, deux zones, trois zones et quatre zones.

Dans la présente description, on entend par 'zone' un espace de l'habitacle du véhicule dans laquelle est distribué un flux d'air à une température donnée et à un débit de flux d'air défini.

Ainsi, pour une installation de chauffage, ventilation et/ou climatisation dédiée à une zone, on considère, de façon générale, la totalité de l'habitacle est considérée comme une seule et unique zone. En conséquence, il n'y a pas de distinction entre l'espace avant gauche, avant droite et arrière de l'habitacle du véhicule.

Pour une telle installation, il n'y a pas donc pas de différenciation entre les différentes zones. Pour ce faire, les organes de mixage d'air principal gauche 21 g et droite 21 d sont solidarisés. En conséquence, le mouvement de ces deux organes 21g et 21 d est synchrone et ils sont mus simultanément et occupent les mêmes positions de part et d'autre de la paroi se séparation médiane 25.

De façon analogue, les volets 'aération' avant gauche 35g et droite 35d sont accouplés l'un avec l'autre et, d'autre part, les volets 'dégivrage' gauche 37g et droite 37d sont associés afin que leurs mouvements respectifs soient identiques.

Selon une variante préférentielle de l'invention, l'ensemble des volets 'aération' avant gauche 35g et droite 35d et des volets 'dégivrage' gauche 37g et droite 37d sont regroupés sur un unique ensemble formant ainsi un mono-volet 'aération/dégivrage'.

Enfin, les premiers volets de mixage d'air additionnel gauche 29g et droite 29d sont réunis pour obtenir un déplacement simultanés de ces deux volets.

Afin de gérer l'alimentation en air des chambres de chauffage gauche 12g et droite 12d, les organes de mixage d'air secondaire gauche 22g et droite 22d sont accouplés pour obtenir une concordance de déplacement de ces deux organes.

Dans cette configuration, les chambres de mixage principale gauche 14g et droites 14d sont alimentées par des flux d'air ayant les mêmes caractéristiques aérothermiques.

Selon une autre variante de réalisation, la gestion de l'alimentation des chambres de chauffage gauche 12g et droite 12d peut être réalisé uniquement par les premiers volets de mixage d'air additionnel gauche 29g et droite 29d réunis.

Dans cette configuration dite 'une zone', les sorties d'air arrière 5g, 5h, 5i et 5j sont commandés par les volets 'aération' arrière gauche 42g et droite 42d et les volets 'pied' arrière gauche 44g et droite 44d qui sont déplacés en cohérence avec les divers volets commandant les volets 'aération' avant gauche 35g et droite 35d.

Ainsi, dans le cadre d'une installation dite 'une zone' les différents volets sont mus simultanément afin de permettre une distribution d'un flux ayant des caractéristiques identiques dans les sorties désirées. De façon préférentielle, l'ensemble des volets sont reliés entre eux par des bielles et/ou manivelles qui sont déplacées par une cinématique centrale, notamment une came, actionnée par un unique organe de commande, par exemple un micro-moteur.

Selon une alternative non représentée, les sorties d'air arrière 5g, 5h, 5i et 5j peuvent être maintenues dans une position dite 'fermée' par les volets 'aération' arrière gauche 42g et droite 42d et les volets 'pied' arrière gauche 44g et droite 44d sont maintenus fixes ou les sorties d'air arrières 5g, 5h, 5i et 5j sont obturées par des couvercles.

Pour une installation de chauffage, ventilation et/ou climatisation dédiée à deux zones, on considère, de façon générale, les seules zones gauche et droite de l'habitacle du véhicule.

Dans cette configuration, l'habitacle est divisé en un espace gauche et un espace droite dans lesquels sont distribués des flux d'air respectifs à une température donnée et à une débit de flux d'air défini selon la zone de distribution.

Une installation dite 'deux zones' diffère d'une installation dite 'une zone' décrite précédemment par le fait que la paroi de séparation médiane 24 permet de créer la distinction de traitement aérothermique entre la zone gauche et la zone droite de l'habitacle du véhicule.

Dans cette configuration, respectivement, les organes de mixage d'air principal gauche 21 g et droite 21 d, les volets 'aération' avant gauche 35g et droite 35d et les premiers volets de mixage d'air additionnel gauche 29g et droite 29d sont indépendants. Ils peuvent donc être mus indépendant les uns des autres.

Ainsi, les chambres de mixage principale gauche 14g et droites 14d sont alimentées de façon indépendantes afin de pouvoir obtenir des flux d'air au niveau des sorties d'air 'aération' avant gauche 5a et droite 5b ayant des caractéristiques aérothermiques différentes.

Ainsi, dans une installation de chauffage, ventilation et/ou climatisation dédiée à deux zones, l'ensemble des volets dédiées à la zone gauche sont reliés entre eux par des bielles et/ou manivelles qui sont mues par une cinématique centrale, notamment une came, actionnée par un unique organe de commande dédié à la zone gauche, par exemple un micro-moteur. De façon symétrique, un agencement similaire est défini pour les volets dédiées à la zone droite actionnés par un unique organe de commande dédié à la zone droite, par exemple un micro-moteur.

De façon alternative, il est possible de disposer les organes de commande d'un même coté de l'installation. Ainsi, les organes de commandes droite et gauche forment un ensemble unitaire constitué de deux cames en coopération et de bielles de renvoi permettant de commander indépendamment les volets dédiés à la zone droite des volets dédiés à la zone gauche.

Pour une installation de chauffage, ventilation et/ou climatisation dédiée à trois zones, on considère, de façon générale, la zone avant du véhicule en différenciant la zone avant gauche et la zone avant droite de l'habitacle du véhicule et une unique zone arrière de l'habitacle du véhicule.

Pour une telle installation, la structure d'une installation dite 'deux zones' est reprise. En complément, les sorties arrières 5g, 5h, 5i et 5j sont commandées indépendamment pour fournir un flux d'air à la zone arrière. Toutefois, dans une configuration dite 'trois zones', une unique zone arrière est considérée.

En conséquence, les volets 'aération' arrière gauche 42g et droite 42d et les volets 'pied' arrière gauche 44g et droite 44d sont accouplés afin d'être déplacé simultanément et prendre ensemble les mêmes positions.

Selon cette variante de réalisation, l'installation dispose de trois organes de commandes respectivement dédiés à la zone avant gauche, à la zone avant droite et à la zone arrière.

Pour une installation de chauffage, ventilation et/ou climatisation dédiée à quatre zones, on considère, de façon générale, la zone avant du véhicule en différenciant la zone avant gauche et la zone avant droite de l'habitacle du véhicule et la zone arrière du véhicule en différenciant la zone arrière gauche et la zone arrière droite de l'habitacle du véhicule.

Pour ce faire, l'ensemble des volets décrits précédemment sont indépendants les uns des autres. Il est donc possibles d'obtenir des mises au point très diverses entre toutes les zones de l'habitacle.

Ainsi, quatre organes de commandes respectivement dédiés à la zone avant gauche, à la zone avant droite, à la zone arrière droite et à la zone arrière gauche sont agencés sur l'installation pour une commande indépendante des différentes zones.

Par ailleurs, pour toutes les configurations précédemment décrites, il est possible d'obtenir d'autre configurations alternatives en accouplant spécifiquement certains volets afin d'avoir des asservissement de mouvements.

En particulier, l'installation 1 peut être équipée de moyens d'asservissement de la position des volets 'pied' avant gauche 39g et droite 39d avec les volets 'aération' avant gauche 35g et droite 35d.

Pareillement, il est souhaitable d'accoupler, quelque soit la configuration souhaitée, les volets 'dégivrage' gauche 37g et droite 37d afin d'avoir un seul même moyen de commande de la sortie 'dégivrage' 5c ensemble 5d.

Un tel couplage de volets entre eux peut être réalisé par tous moyens d'accouplement. En particulier, il est possible de disposer une bielle entre les volets afin d'unir leur mouvement. Pareillement, il est possible de relier les axes de chacun des volets par un unique arbre afin de créer la cohérence de déplacement des volets accouplés. Il peut également être envisager de commander chaque volet par un micromoteur recevant la même information pour deux volets dont les mouvements sont synchronisés.

Selon l'ensemble des variantes de réalisation décrites précédemment, les organes de commandes respectives des zones de l'habitacle peuvent être disposés en différents emplacements sur le boîtier de l'installation ou être centralisés en un/des emplacement(s) commun(s) afin de minimiser l'encombrement général. Selon cette deuxième alternative, les organes de commandes peuvent constituer des dispositifs centralisés de commande formant un ensemble unitaire comportant, par exemple, plusieurs cames coopérant entre elles et dédiées respectivement à une zone spécifique de l'habitacle.

La présente invention couvre les modes de réalisation dans lesquels les différents volets sont gérés indépendamment les uns des autres par l'intermédiaire de moyens de commande indépendants, par exemple des micromoteurs électriques mais aussi les installations dans lesquelles les différents organes sont commandés mécaniquement, en particulier par l'intermédiaire de câbles 'Bowden'.

Comme il a été détaillé, le procédé d'utilisation de l'installation présente l'avantage de pourvoir répondre aux besoins d'évolutivité en fonction du nombre de zones de l'habitacle d'un véhicule à aérer de façon simple, rapide et à faible coût. En effet, quelque soit la configuration recherchée, l'encombrement de l'installation reste la même et les composants internes sont identiques. Cela permet de réaliser des économies compte tenu des grandes quantités produites pour chaque composant.

Dans la description d'un mode préféré de réalisation de la présente invention, les divers organes de mixage d'air et volets sont réalisés sous la forme d'un volet de type 'tambour' ou de volet de type 'papillon' Toutefois, selon des variantes de réalisation non représentées, ces éléments peuvent prendre d'autres formes. Ils peuvent, alternativement et indifféremment, être des volets de type 'tambour' ou 'papillon' ou 'drapeau'.

La présente invention trouve une application toute particulière dès lors que doit être développée un appareil de chauffage, ventilation et/ou climatisation destiné à des véhicules automobiles requérant différentes configurations de distribution de l'air traité dans l'habitacle en conservant un encombrement identique pour toutes les versions.

Bien évidemment, l'invention n'est pas limitée aux modes de réalisation décrits précédemment et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Procédé d'utilisation d'une installation de chauffage, ventilation et/ou climatisation, notamment pour un habitacle de véhicule automobile, comprenant un boîtier (2) ayant une entrée d'air (4) pour admettre un flux d'air (6) dans le boîtier (2), au moins un échangeur de chaleur (7, 8, 9) pour traiter thermiquement le flux d'air (6) et au moins une sortie d'air (5, 5a, 5b,... 5h) pour distribuer le flux d'air (6) traité thermiquement dans au moins une zone de l'habitacle, le boîtier (2) étant délimité par une enveloppe (3) définissant un volume déterminé de l'installation, le boîtier (2) comprenant une paroi de séparation médiane (24) divisant au moins une partie du boîtier (2) en deux parties symétriques et, le volume de l'enveloppe (3) de l'installation apte à distribuer le flux d'air (6) traité thermiquement dans une zone de l'habitacle étant identique au volume de l'installation apte à distribuer le flux d'air (6) traité thermiquement dans plusieurs zones de l'habitacle, **caracterisé en ce que** quelque soit le nombre de zones de l'habitacle à aérer, l'encombrement de l'installation reste le même et les composants internes sont identiques.

2. Procédé d'utilisation d'une installation de chauffage, ventilation et/ou climatisation selon la revendication 1, **caractérisé en ce que** le boîtier (2) comprend un évaporateur (7) pour refroidir le flux d'air (6) le traversant, un radiateur de chauffage (8) et/ou un radiateur additionnel (9) pour réchauffer au moins une partie du flux d'air (6) ayant traversé de l'évaporateur (7).

3. Procédé d'utilisation d'une installation de chauffage, ventilation et/ou climatisation selon la revendication 2, **caractérisé en ce que** le boîtier (2) comprend deux chambres de mixage principales (14g, 14d) disposées de part et d'autre de la paroi de séparation (24) admettant respectivement une portion du flux d'air ayant traversé l'évaporateur (7) et/ou une portion du flux d'air ayant traversé le radiateur de chauffage (8) et/ou le radiateur additionnel (9).

4. Procédé d'utilisation d'une installation de chauffage, ventilation et/ou climatisation selon la revendication 3, **caractérisé en ce que** le boîtier (2) comprend deux organes de mixage d'air principaux (21g, 21d) disposés de part et d'autre de la paroi de séparation (24) et commandant respectivement l'admission de la portion du flux d'air ayant traversé l'évaporateur (7) et/ou de la portion du flux d'air ayant traversé le radiateur de chauffage (8) et/ou le radiateur additionnel (9) dans les chambres de mixages principales (14g, 14d).

5. Procédé d'utilisation d'une installation de chauffage, ventilation et/ou climatisation selon la revendication 3 ou 4, **caractérisé en ce que** le boîtier (2) comprend deux premiers volets de mixage d'air additionnels (29g, 29d) disposés de part et d'autre de la paroi de séparation (24) et commandant la portion du flux d'air ayant traversé l'évaporateur (7) dirigée vers le radiateur de chauffage (8) et/ou le radiateur additionnel (9).

6. Procédé d'utilisation d'une installation de chauffage, ventilation et/ou climatisation selon l'une des revendications 3 à 5, **caractérisé en ce que** le boîtier (2) comprend deux organes de mixage d'air secondaire (22g, 22d) disposés de part et d'autre de la paroi de séparation (24) et commandant respectivement la portion du flux d'air ayant traversé l'évaporateur (7) et/ou la portion du flux d'air ayant traversé le radiateur de chauffage (8) et/ou le radiateur additionnel (9) dans deux chambres de mixage secondaires (18g, 18d).

7. Procédé d'utilisation d'une installation de chauffage, ventilation et/ou climatisation selon la revendication 6, **caractérisé en ce que** le boîtier (2) comprend deux deuxièmes volets de sécurité additionnels (34g, 34d) disposés de part et d'autre de la paroi de séparation (24) et commandant la portion du flux d'air ayant traversé le radiateur de chauffage (8) et/ou le radiateur additionnel (9) dans les chambres de mixages secondaires (18g, 18d).

8. Procédé d'utilisation d'une installation de chauffage, ventilation et/ou climatisation selon l'une des revendications 4 à 7, **caractérisé en ce que** les organes de mixages d'air principaux (21g, 21 d) sont commandés simultanément.

9. Procédé d'utilisation d'une installation de chauffage, ventilation et/ou climatisation selon l'une des revendications 5 à 8, **caractérisé en ce que** les premiers volets de mixage d'air additionnels (29g, 29d) sont commandés simultanément.

10. Procédé d'utilisation d'une installation de chauffage, ventilation et/ou climatisation selon l'une des revendications 6 à 9, **caractérisé en ce que** les organes de mixage d'air secondaire (22g, 22d) sont commandés simultanément.

11. Procédé d'utilisation d'une installation de chauffage, ventilation et/ou climatisation selon l'une des revendications 7 à 10, **caractérisé en ce que** les deuxièmes volets de sécurité additionnels (34g, 34d) sont commandés simultanément.

12. Procédé d'utilisation d'une installation de chauffage, ventilation et/ou climatisation selon l'une des revendications précédentes, **caractérisé en ce que** l'installation comporte plusieurs sorties d'air (5, 5a, 5b,... 5h) dans lesquelles sont agencés des volets de distribution d'air (35g, 35d, 37g, 37d, 39g, 39d, 42g, 42d, 44g, 44d) pour commander l'ouverture et la fermeture des sorties d'air (5, 5a, 5b,... 5h).

13. Procédé d'utilisation d'une installation de chauffage, ventilation et/ou climatisation selon la revendication 12, **caractérisé en ce que** les volets de distribution d'air (35g, 35d, 37g, 37d, 39g, 39d, 42g, 42d, 44g, 44d) sont accouplés par paire et commandés simultanément.

## Claims

1. Method for using a heating, ventilation and/or air conditioning installation, notably for a motor vehicle interior, comprising a housing (2) having an air inlet (4) for admitting an air flow (6) to the housing (2), at least one heat exchanger (7, 8, 9) for thermally treating the air flow (6) and at least one air outlet (5, 5a, 5b,... 5h) to distribute the thermally treated air flow (6) to at least one zone of the vehicle interior, the housing (2) being delimited by a casing (3) defining a determined volume of the installation, the housing (2) comprising a central dividing wall (24) dividing at least part of the housing (2) into two symmetrical parts, and the volume of the casing (3) of the installation able to distribute the thermally treated air flow (6) to a zone of the vehicle interior which is identical to the volume of the installation able to distribute the thermally treated air flow (6) to several zones of the vehicle interior, **characterized in that**, irrespective of the number of zones to be aerated in the vehicle interior, the size of the installation remains the same and the internal components are identical.

2. Method of using a heating, ventilation and/or air conditioning installation according to Claim 1, **characterized in that** the housing (2) comprises an evaporator (7) to cool the air flow (6) passing through it, a heating radiator (8) and/or an additional radiator (9) for heating up at least part of the air flow (6) that has passed through the evaporator (7).

3. Method of using a heating, ventilation and/or air conditioning installation according to Claim 2, **characterized in that** the housing (2) comprises two main mixing chambers (14g, 14d) positioned one on each side of the dividing wall (24) and respectively admitting a portion of the air flow that has passed through the evaporator (7) and/or a portion of the air flow that has passed through the heating radiator (8) and/or the additional radiator (9).

4. Method of using a heating, ventilation and/or air conditioning installation according to Claim 3, **characterized in that** the housing (2) comprises two main air mixing members (21g, 21d) positioned one on each side of the dividing wall (24) and respectively controlling the admission of the portion of the air flow that has passed through the evaporator (7) and/or the portion of the air flow that has passed through the heating radiator (8) and/or the additional radiator (9) in the main mixing chambers (14g, 14d).

5. Method of using a heating, ventilation and/or air conditioning installation according to Claim 3 or 4, **characterized in that** the housing (2) comprises two first additional air mixing flaps (29g, 29d) positioned one on each side of the dividing wall (24) and controlling the portion of the air flow that has passed through the evaporator (7) directed towards the heating radiator (8) and/or the additional radiator (9).

6. Method of using a heating, ventilation and/or air conditioning installation according to one of Claims 3 to 5, **characterized in that** the housing (2) comprises two secondary air mixing members (22g, 22d) positioned one on each side of the dividing wall (24) and respectively controlling the portion of the air flow that has passed through the evaporator (7) and/or the portion of the air flow that has passed through the heating radiator (8) and/or the additional radiator (9) in two secondary mixing chambers (18g, 18d).

7. Method of using a heating, ventilation and/or air conditioning installation according to Claim 6, **characterized in that** the housing (2) comprises two additional second safety flaps (34g, 34d) positioned one on each side of the dividing wall (24) and controlling the portion of the air flow that has passed through the heating radiator (8) and/or the additional radiator (9) in the secondary mixing chambers (18g, 18d).

8. Method of using a heating, ventilation and/or air conditioning installation according to one of Claims 4 to 7, **characterized in that** the main air mixing members (21g, 21d) are controlled simultaneously.

9. Method of using a heating, ventilation and/or air conditioning installation according to one of Claims 5 to 8, **characterized in that** the first additional air mixing flaps (29g, 29d) are controlled simultaneously.

10. Method of using a heating, ventilation and/or air conditioning installation according to one of Claims 6 to 9, **characterized in that** the secondary air mixing members (22g, 22d) are controlled simultaneously.

11. Method of using a heating, ventilation and/or air conditioning installation according to one of Claims 7 to 10, **characterized in that** the second additional safety flaps (34g, 34d) are controlled simultaneously.

12. Method of using a heating, ventilation and/or air conditioning installation according to one of the preceding claims, **characterized in that** the installation comprises several air outlets (5, 5a, 5b,... 5h) in which air distribution flaps (35g, 35d, 37g, 37d, 39g, 39d, 42g, 42d, 44g, 44d) are arranged for controlling the opening and closing of the air outlets (5, 5a, 5b,... 5h).

13. Method of using a heating, ventilation and/or air conditioning installation according to Claim 12, **characterized in that** the air distribution flaps (35g, 35d, 37g, 37d, 39g, 39d, 42g, 42d, 44g, 44d) are coupled in pairs and controlled simultaneously.

## Patentansprüche

1. Verfahren zur Nutzung einer Heizungs-, Lüftungs- und/oder Klimaanlage, insbesondere für einen Kraftfahrzeuginnenraum, die ein Gehäuse (2) mit einem Lufteingang (4) für den Einlass eines Luftstroms (6) in das Gehäuse (2), mindestens einem Wärmetauscher (7, 8, 9) zur Wärmebehandlung des Luftstroms (6) und mindestens einem Luftausgang (5, 5a, 5b, ... 5h) zur Verteilung des wärmebehandelten Luftstroms (6) in mindestens einer Zone des Innenraums enthält, wobei das Gehäuse (2) von einer Hülle (3) begrenzt wird, die ein bestimmtes Volumen der Anlage definiert, wobei das Gehäuse (2) eine mittlere Trennwand (24) enthält, die mindestens einen Teil des Gehäuses (2) in zwei symmetrische Teile teilt, und das Volumen der Hülle (3) der Anlage, das den wärmebehandelten Luftstrom (6) in einer Zone des Innenraums verteilen kann, gleich dem Volumen der Anlage ist, das den wärmebehandelten Luftstrom (6) in mehreren Zonen des Innenraums verteilen kann, **dadurch gekennzeichnet, dass** unabhängig von der Anzahl von zu belüftenden Zonen des Innenraums der Platzbedarf der Anlage derselbe bleibt und die inneren Bestandteile gleich sind.

2. Verfahren zur Nutzung einer Heizungs-, Lüftungs- und/oder Klimaanlage nach Anspruch 1, **dadurch gekennzeichnet, dass** das Gehäuse (2) einen Verdampfer (7) zum Kühlen des es durchquerenden Luftstroms (6), einen Heizkörper (8) und/oder einen zusätzlichen Heizkörper (9) enthält, um zumindest einen Teil des Luftstroms (6) aufzuwärmen, der den Verdampfer (7) durchquert hat.

3. Verfahren zur Nutzung einer Heizungs-, Lüftungs- und/oder Klimaanlage nach Anspruch 2, **dadurch gekennzeichnet, dass** das Gehäuse (2) zwei zu beiden Seiten der Trennwand (24) angeordnete Hauptmischkammern (14g, 14d) enthält, die je einen Teil des Luftstroms, der den Verdampfer (7) durchquert hat, und/oder einen Teil des Luftstroms einlassen, der den Heizkörper (8) und/oder den zusätzlichen Heizkörper (9) durchquert hat.

4. Verfahren zur Nutzung einer Heizungs-, Lüftungs- und/oder Klimaanlage nach Anspruch 3, **dadurch gekennzeichnet, dass** das Gehäuse (2) zwei Hauptluftmischorgane (21g, 21d) enthält, die zu beiden Seiten der Trennwand (24) angeordnet sind und den Einlass des Teils des Luftstroms, der den Verdampfer (7) durchquert hat, und/oder des Teils des Luftstroms, der den Heizkörper (8) und/oder den zusätzlichen Heizkörper (9) durchquert hat, in die Hauptmischkammern (14g, 14d) steuern.

5. Verfahren zur Nutzung einer Heizungs-, Lüftungs- und/oder Klimaanlage nach Anspruch 3 oder 4, **dadurch gekennzeichnet, dass** das Gehäuse (2) zwei erste zusätzliche Luftmischklappen (29g, 29d) enthält, die zu beiden Seiten der Trennwand (24) angeordnet sind und je den Teil des Luftstroms steuern, der den Verdampfer (7) durchquert hat und zum Heizkörper (8) und/oder zum zusätzlichen Heizkörper (9) gerichtet ist.

6. Verfahren zur Nutzung einer Heizungs-, Lüftungs- und/oder Klimaanlage nach einem der Ansprüche 3 bis 5, **dadurch gekennzeichnet, dass** das Gehäuse (2) zwei Sekundärluftmischorgane (22g, 22d) enthält, die zu beiden Seiten der Trennwand (24) angeordnet sind und den Teil des Luftstroms, der den Verdampfer (7) durchquert hat, und/oder den Teil des Luftstroms, der den Heizkörper (8) und/oder den zusätzlichen Heizkörper (9) durchquert hat, in zwei Sekundärmischkammern (18g, 18d) steuern.

7. Verfahren zur Nutzung einer Heizungs-, Lüftungs- und/oder Klimaanlage nach Anspruch 6, **dadurch gekennzeichnet, dass** das Gehäuse (2) zwei zweite zusätzliche Sicherheitsklappen (34g, 34d) enthält, die zu beiden Seiten der Trennwand (24) angeordnet sind und den Teil des Luftstroms, der den Heizkörper (8) und/oder den zusätzlichen Heizkörper (9) durchquert hat, in die Sekundärmischkammern (18g, 18d) steuern.

8. Verfahren zur Nutzung einer Heizungs-, Lüftungs- und/oder Klimaanlage nach einem der Ansprüche 4 bis 7, **dadurch gekennzeichnet, dass** die Hauptluftmischorgane (21g, 21d) gleichzeitig gesteuert werden.

9. Verfahren zur Nutzung einer Heizungs-, Lüftungs- und/oder Klimaanlage nach einem der Ansprüche 5 bis 8, **dadurch gekennzeichnet, dass** die ersten zusätzlichen Luftmischklappen (29g, 29d) gleichzeitig gesteuert werden.

10. Verfahren zur Nutzung einer Heizungs-, Lüftungs- und/oder Klimaanlage nach einem der Ansprüche 6 bis 9, **dadurch gekennzeichnet, dass** die Sekundärluftmischorgane (22g, 22d) gleichzeitig gesteuert werden.

11. Verfahren zur Nutzung einer Heizungs-, Lüftungs- und/oder Klimaanlage nach einem der Ansprüche 7 bis 10, **dadurch gekennzeichnet, dass** die zweiten zusätzlichen Sicherheitsklappen (34g, 34d) gleichzeitig gesteuert werden.

12. Verfahren zur Nutzung einer Heizungs-, Lüftungs- und/oder Klimaanlage nach einem der vorhergehenden Ansprüche, **dadurch gekennzeichnet, dass** die Anlage mehrere Luftausgänge (5, 5a, 5b, ... 5h) aufweist, in denen Luftverteilungsklappen (35g, 35d, 37g, 37d, 39g, 39d, 42g, 42d, 44g, 44d) eingerichtet sind, um das Öffnen und Schließen der Luftausgänge (5, 5a, 5b, ... 5h) zu steuern.

13. Verfahren zur Nutzung einer Heizungs-, Lüftungs- und/oder Klimaanlage nach Anspruch 12, **dadurch gekennzeichnet, dass** die Luftverteilungsklappen (35g, 35d, 37g, 37d, 39g, 39d, 42g, 42d, 44g, 44d) paarweise gekoppelt sind und gleichzeitig gesteuert werden.
